# EUROPEAN PATENT APPLICATION

(11) **EP 0 568 703 A1**
(43) Date of publication of application: **10.11.1993**
(21) Application number: 92923515.8
(22) Date of filing: 11.11.1992
(51) Int. Cl.: G05B 19/403

(54) **METHOD OF RESUMING MACHINING OF WORK**

(30) Priority: 21.11.1991 JP 306171/91
(71) Applicant: FANUC LTD., Minamitsuru-gun, Yamanashi 401-05 (JP)
(72) Inventor: MASUDA, Teruo Fanuc Dai-3 Villa-Karamatsu, Yamanashi 401-05 (JP); FUJIWARA, Kohji, Tokyo 146 (JP)
(74) Representative: Brunner, Michael John
(86) International application number: JP9201477
(87) International publication number: WO9310488

(57) **Abstract**

A method for resuming the machining of works, which shortens the time until the resume of the machining after an alarm is generated. When an alarm, which can be released by correcting the machining program and by changing machining conditions, is generated, machining control, copying, etc. are resumed automatically from the end point of the previous block of the program (steps S12-S16). Thereby, the machining control, copying, etc., which are conventionally interrupted until operators perform the correction of the machining program and the change of the machining conditions, can be performed continuously without any interruption. Therefore, even in the case of an unmanned operation of a long time, any unnecessary time is not wasted.

## Description

### Technical Field

The present invention relates to a method of restarting a workpiece machining when an alarm is given, and in particular, to a method which is capable of restarting the machining when the alarm is given during the workpiece machining according to a numerical control unit.

### Background Art

In the case where a workpiece machining is executed by using a CNC (numerical control unit) laser beam machine or a CNC machine tool, an operation of these machines i$ stopped at the time when an alarm is given, causing the machining to interrupt. In such a case, in order to restart the machining, it is necessary that an operator cancels the alarm every time it is given.

However, the interruption of machining by the alarm is made without relation to kinds of the alarm. For example, there is an alarm which represents excessive deviation in a tracing process for executing a laser beam machining. Even if such an alarm, which is capable of being cleared by the correction of machining programs, the change of machining conditions and the like is given, the machining (referred to as "machining" including the tracing process later) is interrupted. Accordingly, in order to restart the machining, it is necessary that the operator moves a cursor on CRT to the beginning point of the block when the alarm is given, or modifies the machining programs and conditions.

However, during the workpiece machining, the operator is not always at the machine side. For this reason, even if the alarm can be cleared by the correction of machining programs, the change of machining conditions and the like, the machining sometimes remains interrupted. Especially, if such an alarm is given during long-term unmanned operation, it takes a wasteful time to restart the machining.

### Disclosure of the Invention

The present invention has been made in view of the above problems. Therefore, an object of the present invention is to provide a method of restarting a workpiece machining, which is capable of shortening the time spent in restarting the machining when an alarm is given.

To achieve the above object, the present invention can provide a method of restarting a workpiece machining when an alarm is given, wherein the workpiece machining is restarted from the end point of a program which is one-block prior when the alarm is given.

When the workpiece machining is restarted from the end point of the program which is one-block prior when the alarm is given, the workpiece machining is automatically restarted. Accordingly, the time spent in restarting the machining when the alarm is given is shortened.

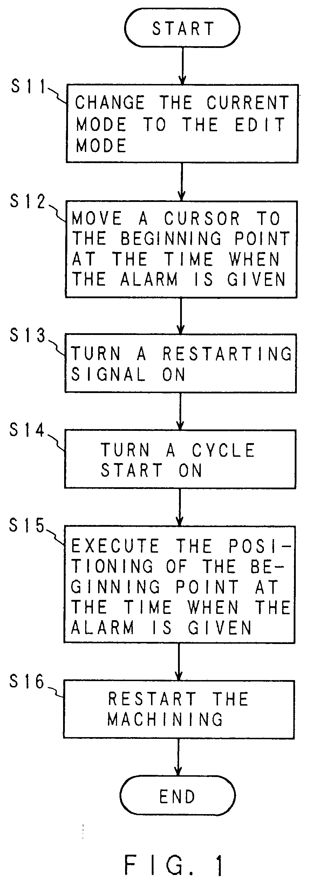

### Brief Description of the Drawings Fig. 1 is a flowchart of the program for carrying out the present invention, showing a machining restart process;

Fig. 2 is a block diagram, schematically showing the configuration of a laser beam machine to which a method of restarting a workpiece machining according to the present invention is applied; and

Fig. 3 is a flowchart of the program for carrying out the present invention, showing the procedures to cope with an alarm.

### Best Mode of Carrying Out the Invention

One embodiment of the present invention will be described below with reference to the drawings.

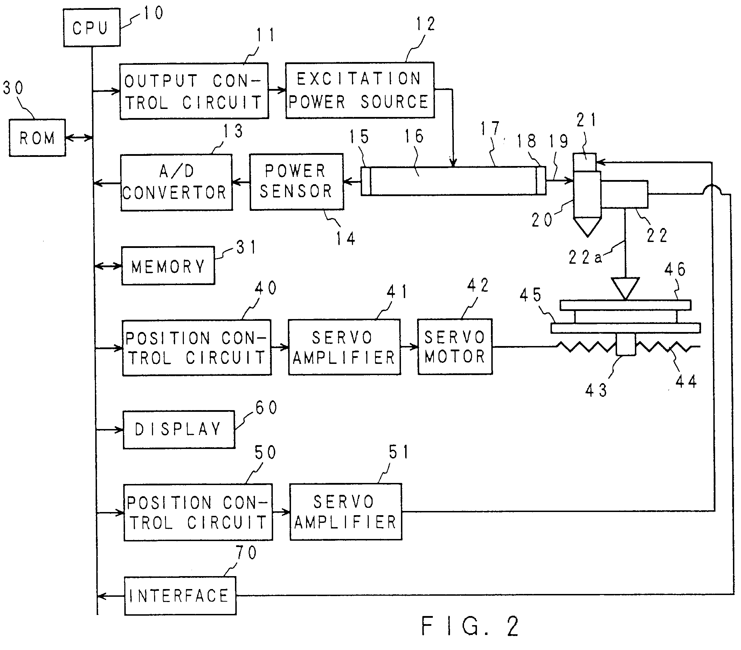

Fig. 2, in a block diagram, schematically shows a configuration of a laser beam machine to which a method of restarting a workpiece machining according to the present invention is applied. In Fig. 2, a processor 10 reads out machining programs stored in a memory 31 on the basis of control programs stored in a ROM 30 and programs for carrying out the method of restarting the workpiece machining according to the present invention. And the processor 10 controls the operation of the loser beam machine as a whole. The memory 31 is a nonvolatile memory which stores machining programs, various parameters or the like, and is made of a CMOS which is backed up by a battery.

An output control circuit 11 includes a D/A converter, which converts an output command value outputted from the processor 10 into a current command value, and outputs it. A power source 12 for excitation rectifies a commercial power source, and thereafter executes a switching operation so as to generate a high-frequency voltage, thus supplying a high-frequency current corresponding to the current command value to a discharge tube 17 of a laser beam oscillator. A laser gas 16 circulates in the discharge tube 17, and an electric discharge is generated when the high-frequency voltage from the excitation power source 12 is applied, thereby the laser gas 16 being excited. A rear mirror 15 and an output mirror 18 constitute a Fobry-Perot resonator, and excite loser gas molecules, thus radiating the loser beam (light) 19 to the outside. A power sensor 14 is composed of a thermoelectric or photoelectric transfer element, and inputs part of the laser beam transmitted from the rear mirror 15, thus measuring an output power of the laser beam 19. An A/D converter 13 converts the output from the power sensor 14 into a digital value, and applies it to the processor 10.

The outputted laser beam 19 is converged to a machining head 20, and is radiated on the surface of the workpiece 46, thus the laser beam machining being performed. Further, when executing the tracing process, a tracer head 22 is attached to the machining head 20, and the workpiece (model) 46 is traced by a stylus 22a, thereby the displacement (deviation) of the stylus 22a being detected. The detection data of the tracer head 22 is stored in the memory 31 through on interface 70, and the tracing process is performed on the basis of the data.

A position control circuit 40 controls the rotation of a servo motor 42 in accordance with the command from the processor 10 through a servo amplifier 41, and controls the movement of a table 45 by using a ball screw 44 and a nut 43, thus suitably adjusting the position of the workpiece 46. Although only one control axis is shown in Fig. 2, there are actually a plurality of control axes. Further, a position control circuit 50 controls the rotation of a Servo motor 21 in accordance with the command from the processor 10 through a servo amplifier 51, and executes the position control of the machining head 20 and the tracer head 22. A CRT, a liquid crystal display or the like is used in a display 60.

Next, a method of restarting a workpiece machining according to the present invention, which is used in the case where an alarm representing excessive deviation is given during the execution of the tracing process by means of the above tracer head 22, will be described below. In this case, the alarm representing excessive deviation is an alarm which is given when the deviation of displacement between the starting and the present points detected by the stylus 22a becomes excessive. This alarm is also an alarm capable of being canceled by means of the CNC pursuant to the correction of machining programs, the change of machining conditions or the like.

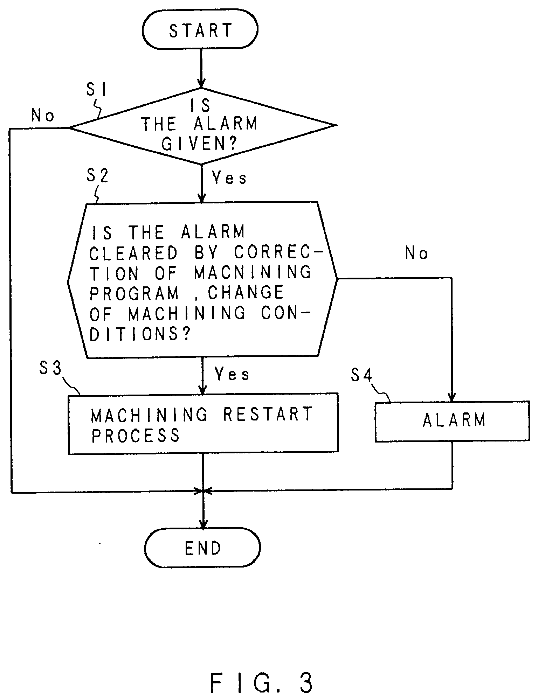

Fig. 3 is a flowchart of the programs for carrying out the present invention, showing the procedures to cope with on alarm. In Fig. 3, numerals following the letter "S" represent step numbers.
[S1] Determine whether or not the alarm is given. If the alarm is given, the sequence advances to step S2. If not, the present program ends as it is.
[S2] Determine whether or not the alarm is cleared by the correction of machining programs, the change of machining conditions or the like. If the alarm is cleared by the correction of machining programs, the change of machining conditions or the like, the sequence advances to step S3. If not, the sequence advances to step S4.
[S3] This step is the case where the alarm is cleared by the correction of machining programs, the change of machining conditions or the like. A machining restart process (shown in Fig. 1) which will be described later is automatically carried out.
[S4] This step is the case where the alarm is not cleared by the correction of machining programs, the change of machining conditions or the like. The operator is warned by occurrence of the alarm. The alarm may be given not only in the case where the alarm is not cleared by the correction of machining programs, the change of machining conditions or the like, but also in the case where the alarm capable of being cleared by the correction of machining programs, the change of machining conditions or the like is given specified times or more. In this case, there is the need of surely canceling the alarm, and the machining restart process is not executed.

Fig. 1 shows the flowchart of the programs for carrying out the present invention, and illustrates the procedures of the machining restart process.
[S11] Change the current mode to on edit mode on the program.
[S12] Move a cursor to a beginning point of a programmed block at the time when the alarm is given.
[S13] Turn a restarting signal on.
[S14] Turn a cycle start signal on.
[S15] Execute the positioning of the beginning point of the program block at the time when the alarm is given.
[S16] Restart the execution of the program. Namely, the machining control, tracing process or the like is successively performed from the end point of the machining program which is one-block prior.

As described above, in the case where the alarm capable of being canceled by the correction of the machining programs, change of the machining conditions or the like is given, the machining control, the tracing process and the like are automatically restarted from the end point of the machining program which is one-block prior. Therefore, it is possible to successively execute the machining control, the tracing process and the like, which are interrupted in the conventional technique until the operator performs the reset operation, without interruption. Accordingly, no wasteful time is spent in longtime unmanned operation.

The above embodiment has explained the case where the alarm capable of being canceled by the correction of machining programs, the change of machining conditions and the like in CNC laser machines. However, the present Invention may be applied in ordinary CNC machine tools in a like manner.

With the present invention, as described above, in the case where the alarm capable of being canceled by the correction of the machining programs, the change of the machining conditions or the like is given, the machining control, the tracing process and the like are automatically restarted from the end point of the machining program which is one-block prior. Therefore, it is possible to successively execute the machining control, the tracing process and the like, which are interrupted in the conventional technique until the operator performs the correction of machining programs, the change of machining conditions and the like, without interruption. Accordingly, no wasteful time Is spent in long-time unmanned operation.

## Claims

1. A method of restarting a workpiece machining when an alarm is given, wherein said workpiece machining is restarted from the end point of a program which is one-block prior when the alarm is given.

2. A method of restarting a workpiece machining according to claim 1, wherein said alarm is capable of being cleared by a CNC, and said CNC corrects machining conditions and programs in accordance with kinds of the alarm, thus said alarm being automatically canceled.

3. A method of restarting a workpiece machining according to claim 2, wherein a warning is given when said alarm is given specified times or more.

4. A method of restarting a workpiece machining according to claim 1, wherein a CNC laser beam machine is applied in executing said workpiece machining.
